# FASCICULE DE BREVET EUROPEEN

(11) **EP 2 379 354 B1**
(45) Date de publication et mention de la délivrance du brevet: **20.02.2013**
(21) Numéro de dépôt: 09768520.0
(22) Date de dépôt: 04.12.2009
(51) Int. Cl.: B60C 15/06

(54) **PROCEDE DE FABRICATION D'UN BOURRELET DE PNEU ET BOURRELET DE PNEU**
VERFAHREN ZUR HERSTELLUNG EINES REIFENWULSTES UND REIFENWULST
METHOD OF MANUFACTURING A TYRE BEAD AND TYRE BEAD

(30) Priorité: 22.12.2008 FR 0858894
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: COGNE, Michael, F-63200 Riom (FR); NADREAU, Laurent, F-63270 Vic Le Comte (FR); SEIDEL, Niclas, F-63530 Chanat-la-mouteyre (FR); VEYRET, Robert, F-63118 Cebazat (FR)
(74) Mandataire: Diernaz, Christian
(86) Numéro de dépôt international: PCT/EP2009/066394
(87) Numéro de publication internationale: WO 2010/072544

(56) Documents cités:
- WO-A-2004/033789
- WO-A-2005/071157
- WO-A-2007/145284
- JP-A- 2003 039 570

## Description

L'invention concerne un procédé de fabrication de pneus et plus particulièrement un procédé de fabrication des bourrelets de pneu. Elle concerne également les pneus formés avec un tel procédé de fabrication.

Dans le domaine des pneus pour véhicules poids lourd, il est connu de renforcer la structure d'un pneu avec une armature de carcasse comportant des renforts métalliques sous forme de câbles ou assemblages de fils élémentaires. Ces renforts sont disposés notamment selon une direction méridienne dans le pneu qui dans le cas d'espèce est dit pneu radial. Par direction méridienne on entend ici que chaque renfort est soit contenu soit sensiblement contenu dans un plan contenant l'axe de rotation du pneu. Une direction perpendiculaire à un quelconque plan méridien est une direction dite circonférentielle.

Un pneu pour véhicule poids lourd comprend une région de sommet pourvue radialement sur l'extérieur avec une bande de roulement destinée à venir en contact avec la chaussée pendant le roulage. Cette région de sommet comprend une armature de renforcement de sommet surmontant radialement à l'extérieur l'armature de carcasse. Par ailleurs la région de sommet est prolongée latéralement par des flancs se terminant chacun par un bourrelet, chaque bourrelet étant destiné à être en contact avec une jante de montage du pneu.

La fabrication d'un pneu passant par l'assemblage de produits élémentaires de type profilés et de d'éléments de renfort (comme l'armature de carcasse, l'armature de sommet, etc.), il se forme des espaces remplis d'air entre les différents produits élémentaires au moment de l'assemblage. Lors des opérations de moulage et de vulcanisation réalisées dans un moule, les produits élémentaires sont mis en contact et les interfaces entre ces produits élémentaires sont réduits, c'est-à-dire que l'air occlus est soit dirigé vers l'extérieur du pneu soit réparti dans des zones du pneu d'une manière qui n'est pas préjudiciable à la bonne performance dudit pneu.

Il était connu que les assemblages ou câbles métalliques formés d'une pluralité de fils fins étaient calandrés, c'est-à-dire étaient revêtus sur deux faces par une épaisseur appropriée d'une composition de caoutchouc. Cette opération de calandrage, réalisée à froid ou à chaud, ne permettait toutefois pas la pénétration totale de l'intérieur de l'assemblage. Il se créait alors, dans chaque assemblage, au moins un canal dans lequel pouvait se déplacer de l'air. Ce canal avait l'avantage de permettre la circulation de l'air occlus pendant les phases de fabrication et notamment de moulage.

Par contre une fois moulé et vulcanisé, le pneu conservait dans ses assemblages d'armature de carcasse, des canaux qui servaient à concentrer de l'air qui parvenait dans ces canaux vers des zones de plus fortes contraintes. Ce mécanisme peut être un facteur pénalisant pour l'endurance en fatigue des assemblages métalliques. L'air qui arrive dans ces canaux provient notamment de la cavité interne du pneu à l'intérieur de laquelle est appliquée la pression de gonflage, ce qui accroît encore la possibilité de migration vers l'armature de carcasse.

Une solution connue consiste à augmenter l'épaisseur de la composition étanche à base de butyl placée à l'intérieur du pneu (c'est-à-dire entre le pneu et sa cavité interne). Cette solution est cependant coûteuse et peut encore être améliorée.

Une autre solution connue en soi consiste à utiliser des câbles dont la perméabilité à l'air est faible voire nulle. Un câble est dit non perméable à l'air lorsque le débit d'air mesuré dans un test de perméabilité est faible ou nul. Ce test de perméabilité consiste à prélever un échantillon de câble d'une armature de carcasse et à insuffler de l'air à une extrémité d'une longueur de cet échantillon de câble (par exemple 2 cm) sous pression (1 bar) et à mesurer le volume d'air à l'autre extrémité dudit échantillon avec un débitmètre.

Pendant la mesure, l'échantillon de câble est bloqué dans un joint étanche de telle manière que seule la quantité d'air traversant le câble d'une extrémité à l'autre, selon son axe longitudinal, est prise en compte par la mesure. Le débit mesuré est d'autant plus faible que le taux de pénétration du câble par le caoutchouc est plus élevé ou que la structure du câble est fermée. Cette méthode constitue un moyen simple de mesure indirecte du taux de pénétration du câble par une composition de caoutchouc.

Une façon d'obtenir un câble de perméabilité faible ou nulle consiste à l'imprégner à coeur, c'est-à-dire entre tous les fils élémentaires le composant, avec une composition de caoutchouc de manière à éliminer totalement la présence de canaux.

Toutefois l'utilisation de ce type de câbles à perméabilité faible ou nulle empêche l'air occlus durant la phase d'assemblage des produits élémentaires du pneu de circuler pour se répartir de façon uniforme à l'intérieur des câbles pour ensuite diffuser dans les compositions de caoutchouc pendant la phase de moulage et de vulcanisation.

Cette non diffusion de l'air occlus conduit à la formation de zones de non collage entre les produits élémentaires composant le pneu, ces zones de non collage concentrant l'air qui n'a pu être évacué et pouvant générer des réductions de performance en endurance.

L'invention s'attache à éviter ces zones de concentration d'air occlus afin d'obtenir une performance d'endurance améliorée lors de l'utilisation de câbles de l'armature de carcasse imprégnés à coeur par du caoutchouc (voir par exemple WO 2005-071157) ou plus généralement de câbles ayant une perméabilité faible ou nulle.

Dans ce but, il est décrit un procédé de fabricatio, tel que définit dans la revendication 1, d'un pneu comprenant une région de sommet, des flancs dans le prolongement de part et d'autre de la région de sommet, chaque flanc se terminant par un bourrelet destiné à coopérer avec une jante de montage du pneu, chaque bourrelet comprenant une armature de renforcement circonférentiel enveloppée dans un profilé d'enrobage.

Ce pneu comprend en outre une armature de carcasse s'étendant entre les bourrelets en passant dans les flancs, cette armature de carcasse étant ancrée dans chaque bourrelet en s'enroulant en partie autour de chaque armature de renforcement circonférentiel de bourrelet pour former un retournement. Cette armature de carcasse consiste en au moins une nappe de caoutchouc renforcée par une pluralité de câbles métalliques ayant une perméabilité faible ou nulle et orientés radialement dans le pneu, chaque câble étant formé par l'assemblage d'une pluralité de fils élémentaires.

Chaque bourrelet comprend une pluralité de profilés à base de caoutchouc, l'un au moins de ces profilés, dit "profilé de bourrelet" assurant, radialement vers l'extérieur de l'armature de renforcement circonférentiel de bourrelet, le remplissage et la liaison mécanique entre l'armature de carcasse et son retournement, ce profilé de bourrelet comprenant une première surface axialement vers l'intérieur en contact avec l'armature de carcasse et une deuxième surface axialement vers l'extérieur, ces deux surfaces se rejoignant en une ligne formant un apex des points du bourrage radialement les plus à l'extérieur, ces points de l'apex étant situés à une distance D40 mesurée dans le plan de coupe méridien comme la distance de l'apex du profilé de bourrelet au point de l'armature de renforcement circonférentiel de bourrelet radialement le plus à l'intérieur. La première la deuxième surfaces sont réunies entre elles par une troisième surface, cette troisième surface assurant le contact avec le profilé d'enrobage de l'armature de renforcement circonférentiel de bourrelet.

Le retournement de l'armature de carcasse est en contact avec la deuxième face du profilé de bourrelet jusqu'à une distance D11, mesurée dans le plan de coupe méridien comme la distance entre l'extrémité de ce retournement et le point de l'armature de renforcement circonférentiel de bourrelet radialement le plus à l'intérieur. Cette distance D11 est inférieure à la distance D40.

Chaque bourrelet comprend par ailleurs au moins un autre profilé, dit "profilé de remplissage" qui, radialement à l'extérieur des points radialement les plus à l'extérieur du retournement de l'armature de carcasse, est au moins en partie en contact avec une partie de la deuxième surface du profilé de bourrelet pour former une région de contact entre lesdits deux profilés.

Le procédé selon l'invention consiste à réaliser sur l'une au moins des surfaces des profilés en contact, dans la région de contact, une pluralité de rainures, de dimensions appropriées et ne débouchant pas sur l'apex du profilé de bourrelet, afin de permettre le drainage et la répartition de l'air occlus dans le bourrelet pendant les étapes de confection du pneu jusqu'au moulage et à la vulcanisation dudit pneu, la première surface du profilé de bourrelet étant totalement dépourvue de toute rainure. Les rainures ainsi formées sont distantes entre elles d'une distance minimale d'au moins 4 mm et préférentiellement d'au moins 10 mm.

Un profilé de bourrelet étant limité par des surfaces, on définit pour ce bourrelet une première surface axialement vers l'intérieur comme étant une surface qui se trouve être la plus proche de la cavité interne du pneu (à l'intérieur de laquelle agit la pression de gonflage) par rapport aux autres surfaces du même bourrelet. Une surface d'un profilé est dite située axialement à l'extérieur lorsque cette surface est la plus éloignée de la cavité interne du pneu par rapport aux autres surfaces du même profilé.

Les déposants ont constaté qu'il était essentiel, avec l'emploi de câbles ayant une perméabilité faible ou nulle (notamment des câbles gommés à coeur pour renforcer l'armature de carcasse, de ne pas former de rainures sur les parties du profilé de bourrelet contre lesquelles lesdits câbles sont en contact afin d'éviter la création de cavités renfermant de l'air, cet air pouvant ensuite migrer vers lesdits câbles et les fragiliser en modifiant localement leur environnement.

Le document JP-2003-039570 décrit un procédé selon lequel on forme sur les surfaces axialement interne et externe du profilé de bourrelet un très grand nombre de stries très proches les unes des autres, ces stries étant des réservoirs d'air. Contrairement à l'enseignement de ce document, les déposants ont constaté de manière surprenante qu'il était indispensable de former entre chaque rainure des zones lisses dépourvues de toute stries ou rainures et de largeur au moins égale à 4 mm et préférentiellement au moins égale à 10 mm. Il est également fait référence à l'état de la techinique divulgué dans les documents WO-A2004033789 et WO-A2007145284.

La personne du métier adaptera la géométrie de ces rainures et donc le volume utile pour collecter l'air occlus en fonction de la dimension du pneu et de la quantité d'air qui potentiellement peut être occlus. Le volume des rainures ainsi formées sur l'interface entre profilé de bourrelet et profilé de remplissage permet de drainer l'air occlus sur cet interface et d'avoir une surface d'échange avec les profilés suffisante pour permettre la répartition et la diffusion de l'air occlus dans les profilés de caoutchouc tout en ayant des zones de collage appropriées entre les profilés de bourrelet et de remplissage.

Les rainures peuvent être formées sur une partie seulement de la surface du profilé de bourrelet avant assemblage des composants du pneu et donc avant moulage et vulcanisation, cette surface correspondant à la surface qui n'est pas en contact avec l'armature de carcasse et son retournement, permettent de collecter et en même temps de répartir sur cette partie de surface la plus grande partie du volume d'air occlus. En effet, sous l'action de la pression de moulage, l'air environnant l'armature de carcasse et grand nombre de profilés composant le bourrelet est chassé vers les parties d'extrémités du retournement de l'armature de carcasse. Grâce aux rainures ainsi formées, il est possible de concentrer et répartir sur une grande surface l'air occlus dans chaque bourrelet.

Les rainures sont formées sur le profilé à l'état cru, c'est-à-dire non vulcanisé, et ont des profils en coupe qui peuvent être, vues en coupe transversale, de formes diverses comme une forme triangulaire ou une forme rectangulaire.

La présente invention cherche non à évacuer l'air occlus comme c'est le cas dans les documents de l'état de la technique mais à fractionner le volume d'air occlus en le répartissant dans les rainures formées dans une zone hors du contact avec les câbles de l'armature de carcasse tout en assurant un bon contact entre le profilé de bourrelet et le profilé de remplissage. Cet air occlus étant ensuite diffusé dans les matériaux constituant les profilés de bourrelet et de remplissage et non dans l'armature de carcasse ou son retournement.

Dans une autre variante intéressante, les rainures sont formées sur le profilé de remplissage au moins dans la partie en contact avec le profilé de bourrelet.

Il est bien entendu essentiel, compte tenu de la nature des câbles de perméabilité faible ou nulle, de ne pas avoir de rainures à l'interface de l'armature de carcasse avec le profilé de bourrelet pour éviter d'avoir des zones de moindre collage et éviter toute migration ultérieure de l'air occlus gardé dans ces rainures vers les renforts cette armature. C'est la raison pour laquelle l'enseignement du brevet JP2006-346972 montrant un profilé de bourrelet pourvu sur toutes ses parois avec une pluralité de rainures n'est pas pertinent pour résoudre le problème posé par l'usage d'une armature de carcasse dont les renforts sont par exemple gommés à coeur.

Selon l'invention, l'interface du retournement de l'armature de carcasse avec le même profilé de bourrelet est dépourvu de rainures.

L'invention concerne également un pneu fabriqué selon le procédé de fabrication de l'invention et conduisant à l'obtention d'une interface de collage entre le profilé de bourrelet et le profilé de remplissage comprenant une pluralité d'imbrications d'un de ces deux profilés dans l'autre profilé, ces imbrications étant espacées les unes des autres d'une distance au moins égale à 4 mm ou préférentiellement d'au moins 10 mm. Ces imbrications correspondent sensiblement aux profils des rainures formées sur l'un au moins des profilés de bourrelet ou de remplissage.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une coupe d'un pneu pour poids lourd selon l'invention;

La figure 2 montre une coupe agrandie d'un bourrelet de pneu selon l'invention;

La figure 3 montre le profilé de bourrelet utilisé pour fabriquer le bourrelet montré à la figure 2 ;

La figure 4 montre une variante d'un profilé de bourrelet selon lequel les rainures sont formées en hélice sur une partie de la paroi du profilé de bourrelet ;

La figure 5 montre une variante d'un profilé de bourrelet selon l'invention comprenant une pluralité de rainures circonférentielles et de rainures radiales.

Par souci de simplification de lecture, une même référence est employée pour toutes les figures dont la description suit, dès lors que cette référence indique un élément de même structure et de même fonction.

Définitions :

- Le plan équatorial du pneu est un plan qui est perpendiculaire à l'axe de rotation du pneu et qui divise ledit pneu en deux demi pneus. Ce plan équatorial contient notamment les points du pneu radialement les plus éloignés de l'axe de rotation. La trace du plan équatorial est donnée par une ligne XX' sur les figures et l'axe de rotation par la ligne YY'.

- Un premier point est dit radialement à l'extérieur d'un deuxième point, lorsque ce premier point est à une distance de l'axe de rotation qui est plus grande que la distance du deuxième par rapport à cet axe de rotation.

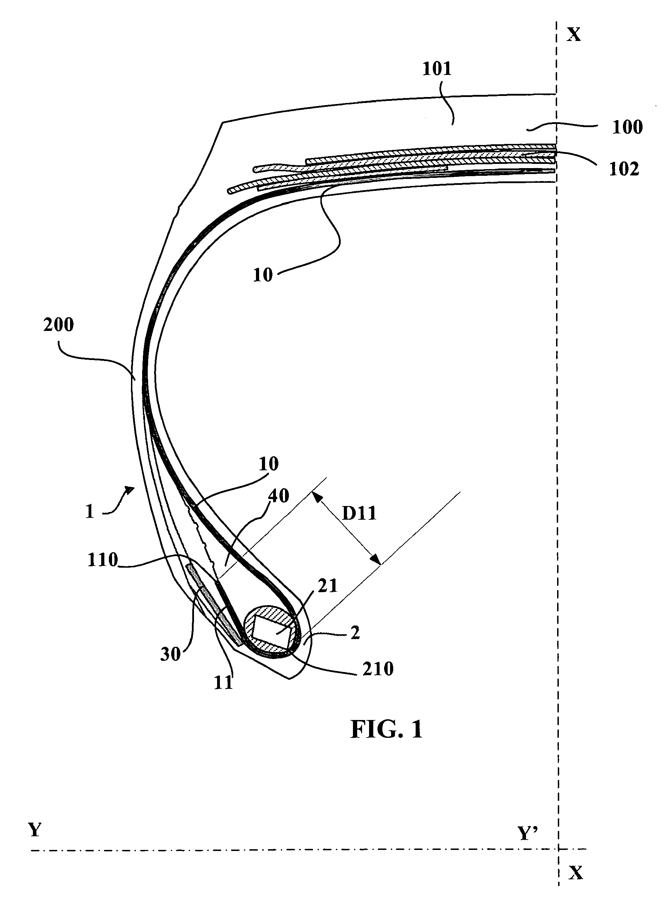

- Un premier point est dit axialement à l'intérieur d'un deuxième point, lorsque ce premier point est, dans une direction parallèle à l'axe de rotation, plus proche du plan équatorial du pneu que le deuxième point ou de manière équivalente que ce premier point est plus proche de la cavité interne du pneu que le deuxième point (dans le cas de la figure 1, la distance du premier point à l'axe XX' est inférieure à la distance du deuxième point au même axe).

- Une coupe méridienne d'un pneu est une coupe du pneu réalisée dans un plan contenant l'axe de rotation du pneu YY'.

- Par direction circonférentielle, on entend ici une direction tangente en tout point d'un cercle centré sur l'axe de rotation.

- Par direction radiale, on entend ici une direction perpendiculaire à l'axe de rotation YY'.

- Par direction axiale, on entend ici une direction qui est perpendiculaire à la direction radiale et qui est parallèle à l'axe de rotation YY' du pneu.

### Description des figures

La figure 1 montre une coupe méridienne d'un demi pneu 1 de dimension 315/70 R 22.5 pour véhicule poids lourd. L'axe XX' coupe perpendiculairement l'axe de rotation YY' et indique la direction radiale ; cet axe XX' coupe le pneu en deux demi pneus.

Ce pneu 1 comprend une région de sommet 100 pourvue radialement sur l'extérieur avec une bande de roulement 101 destinée à venir en contact avec la chaussée pendant le roulage. Cette région de sommet 100 comprend une armature de renforcement de sommet 102 surmontant radialement à l'extérieur une armature de carcasse 10. Par ailleurs la région de sommet est prolongée latéralement par des flancs 200 se terminant chacun par un bourrelet 2, chaque bourrelet étant destiné à être en contact avec une jante de montage du pneu (non représentée ici). Chaque bourrelet comprend une armature de renforcement circonférentiel 21 autour de laquelle est ancrée l'armature de carcasse 10 pour former un retournement 11.

L'armature de carcasse 10 est constituée dans le cas décrit d'une nappe à base d'une composition de caoutchouc renforcée par des câbles métalliques de 19 fils de 0.18 mm de diamètre, ces câbles étant pénétrés à coeur par du caoutchouc dès la fabrication desdits câbles, c'est-à-dire avant même leur incorporation dans ladite nappe. Cette pénétration à coeur bouche les câbles et évite toute circulation d'air à l'intérieur de ceux-ci et confère à ces câbles une perméabilité faible voire nulle. Pour réaliser l'ancrage de l'armature de carcasse dans les bourrelets 2 du pneu, cette nappe est enroulée en partie autour de l'armature de renforcement circonférentiel 21 de l'intérieur du pneu vers l'extérieur, pour former un retournement 11 ayant une extrémité 110 correspondant aux points du retournement radialement les plus à l'extérieur par rapport à l'axe de rotation YY' du pneu. Cette extrémité 110 est à une distance D11 du point 210 de l'armature de renforcement circonférentiel 21 radialement le plus à l'intérieur et axialement le plus à l'intérieur. Dans le pneu les câbles de renfort de l'armature de carcasse sont orientés de manière à faire un angle égal ou proche de 90° avec une direction circonférentielle. Ici la distance D11 est égale à 32 mm.

Par ailleurs, ce pneu comprend une armature complémentaire 30 de renforcement de bourrelet qui est positionnée axialement à l'extérieur du retournement 11 de l'armature de carcasse. Axialement à l'extérieur signifie dans une direction parallèle à l'axe de rotation et dirigé vers l'extérieur de la cavité interne du pneu dans laquelle agit la pression de gonflage du pneu. Dans le cas présent, cette armature complémentaire comprend des renforts (câbles métalliques) orientés d'un angle moyen égal à 22° par rapport à la direction circonférentielle.

Un couplage mécanique entre l'armature de carcasse et le retournement est obtenu grâce à la présence d'un profilé de bourrelet 40 prenant appui sur le profilé de tringle 22.

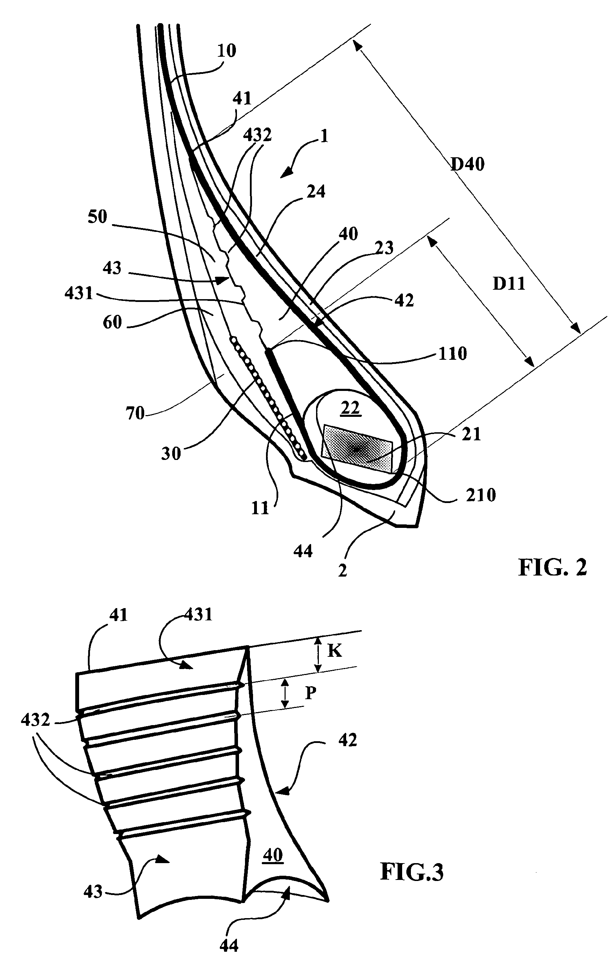

Sur la coupe agrandie du même bourrelet montrée à la figure 2, on distingue l'armature circonférentielle 21 de bourrelet, en l'espèce une tringle de section transversale sensiblement rectangulaire. Cette tringle est entourée d'un profilé de tringle en mélange de caoutchouc 22 autour duquel l'armature de carcasse est enroulée en passant de l'intérieur du pneu vers l'extérieur. Radialement vers l'extérieur, le profilé de tringle 22 est prolongé par un profilé de bourrelet 40 qui assure le remplissage et le couplage mécanique entre l'armature de carcasse 10 et son retournement 11. Ce profilé de bourrelet 40 de géométrie sensiblement triangulaire se termine par un apex 41 dont la distance D40 mesurée par rapport au point 210 radialement le plus à l'intérieur de la tringle et axialement le plus à l'intérieur est supérieure à la distance D11 de l'extrémité du retournement 11 mesurée par rapport au même point. Dans le cas présent, la distance D40 est égale à 75 mm.

Axialement à l'intérieur de l'armature de carcasse, on distingue deux couches de mélanges de caoutchouc, une première couche 23 formée d'une composition étanche à l'air permet de maintenir la pression interne de gonflage du pneu et réduit la diffusion de l'air notamment vers les renforts de l'armature de carcasse. Une seconde couche 24 assure le lien mécanique entre l'armature de carcasse 10 et la première couche 23.

Le profilé de bourrelet 40, vu dans le pneu, comprend une première surface 42 axialement vers l'intérieur en contact avec l'armature de carcasse 10 et une deuxième surface 43 axialement à l'extérieur, ces première et deuxième surfaces se rejoignant en une ligne formant la pointe 41 dudit profilé de bourrelet radialement les plus à l'extérieur. Ces première et deuxième surfaces sont reliées entre elles par une troisième surface 44, cette troisième surface 44 étant en contact avec le profilé de tringle 22.

Le bourrelet comprend en outre au moins un autre profilé, dit profilé de remplissage 50, qui est intercalé entre le retournement de l'armature de carcasse et l'armature complémentaire 30. Ce profilé de remplissage 50 s'étend radialement au-delà de l'extrémité du retournement pour être en contact avec une partie de contact 431 de la deuxième surface du profilé de bourrelet.

Sur cette partie de contact 431 de la deuxième surface du profilé de bourrelet en contact avec le profilé de remplissage 50, on voit des rainures 432 remplies formant des imbrications du matériau du profilé de remplissage à l'intérieur du profilé de bourrelet, au moment de l'opération de moulage du pneu, par le matériau constituant le profilé de remplissage 50 (par souci de simplification de langage on utilise dans ce qui suit indistinctement les termes rainure et imbrication). À l'exception de cette partie de contact 431 de la deuxième surface du profilé de bourrelet 40, les autres parties de surface du profilé de bourrelet, et notamment la première partie 42 et la troisième partie 44, sont exemptes à cru (c'est-à-dire pendant les phases de fabrication du pneu) de toute rainure et de tout creux pouvant créer une perte locale de collage entre l'armature de carcasse et ledit profilé de bourrelet, ou des cavités remplies d'air. Dans le cas présent, les rainures ont une profondeur mesurée sur le profilé non vulcanisé de 1.0 mm. De manière pratique, cette profondeur est avantageusement au moins égale à 0.8 mm et au plus égale à 1.3 mm. Les rainures ont une largeur comprise entre 1 mm et 1.7 mm, dans le cas présent cette largeur est égale à 1.2 mm sur le profilé non vulcanisé.

Grâce à ces rainures disposées dans la direction circonférentielle, c'est-à-dire selon une direction circulaire concentrique à l'axe de rotation, il est possible de drainer et répartir de façon efficace l'air emprisonné dans chaque bourrelet au moment de la fabrication du pneu pendant l'opération de moulage et de vulcanisation en évitant l'accumulation en un point particulier. Préférentiellement, les rainures sont espacées entre elles d'une distance moyenne au moins égale à 4 mm et encore plus préférentiellement au moins égale à 10 mm.

Après moulage du pneu, on obtient une interface de collage entre le profilé de bourrelet et le profilé de remplissage comprenant une pluralité d'imbrications espacées les unes des autres d'une distance au moins égale à 4 mm. Ces imbrications correspondent sensiblement aux profils des rainures formées sur le profilé de bourrelet dans le cas présent.

Ces imbrications sont formées par les profils des rainures à l'intérieur desquelles le profilé de remplissage est venu se mouler en forçant l'air occlus à diffuser dans les matériaux caoutchoutiques des profilés de bourrelet et de remplissage. Chaque rainure sert dans un premier temps de la fabrication du pneu de réservoir à une fraction de l'air occlus et est remplie par le matériau du profilé en contact pendant le moulage et la vulcanisation.

Un autre profilé de recouvrement 60 est placé axialement à l'extérieur de l'armature complémentaire 30 et est en contact partiel avec le profilé de remplissage 50. Enfin un autre profilé de protection 70 est positionné pour être en contact avec une jante de montage du pneu et pour former la partie radialement et axialement la plus à l'intérieur du bourrelet.

L'exemple montré ici avec le support des figures 1, 2 est équivalent au cas non représenté où les rainures sont formées, non sur la surface du profilé de bourrelet mais uniquement sur la partie du profilé de remplissage 50 en contact avec la partie du profilé de bourrelet 40 radialement au delà de l'extrémité 110 du retournement 11 de l'armature de carcasse.

Dans une autre variante, des rainures peuvent être formées sur le profilé de remplissage 50 et sur le profilé de bourrelet 40 dans la zone de contact entre ces deux profilés. Ces rainures peuvent aussi être croisées entre elles, ce qui est favorable pour une meilleure circulation et répartition de l'air occlus.

Sur la figure 3, on montre le profilé de bourrelet 43 utilisé dans la fabrication du pneu montré aux figures 1 et 2. On distingue sur une partie 431 de sa deuxième partie de paroi 43, une pluralité de rainures 432 formées suivant des cercles concentriques à l'axe de rotation. Ces rainures 432 sont formées au cours de l'extrusion du profilé de bourrelet 43. La distance P entre deux rainures est ici la même quelles que soient les rainures considérées et égale à 6 mm. Avantageusement, la partie du profilé de bourrelet se terminant par l'apex sur une largeur K est totalement dépourvue de rainure afin d'éviter de concentrer de l'air occlus dans une partie de profilé de bourrelet de faible épaisseur, cet air occlus pouvant, après diffusion dans le matériau dudit profilé de bourrelet migrer jusqu'à l'armature de carcasse. Préférentiellement cette distance K est au moins égale à 5 mm et encore plus préférentiellement au moins égale à 10 mm.

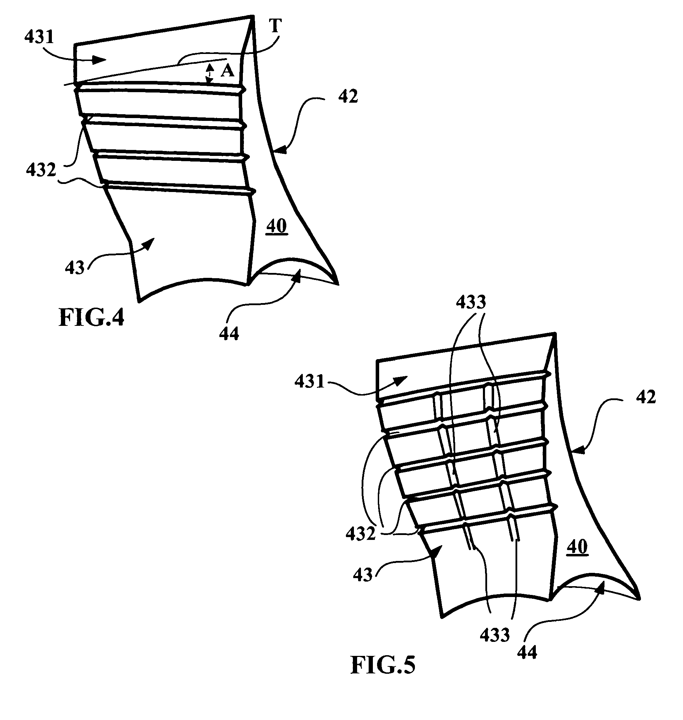

Dans une variante de procédé montrée à la figure 4, une pluralité de rainures 432 sont formées sur une partie 431 de la deuxième partie de paroi d'un profilé de bourrelet selon une forme en hélice, c'est-à-dire faisant un angle moyen A différent de zéro avec une direction circonférentielle (cette direction circonférentielle est montrée par la droite T. Cette disposition permet d'assurer une continuité du drainage de l'air occlus. Dans le cas de cette variante, les rainures ne débouchent pas au niveau de l'apex 41 du profilé de bourrelet pour éviter de créer une concentration d'air en cette extrémité et en conséquence près des renforts de l'armature de carcasse.

Dans une autre variante préférentielle montrée avec la figure 5, le profilé de bourrelet 43 est pourvu sur une partie 431 de sa deuxième partie de paroi 43 avec une pluralité de rainures orientées circonférentiellement 432 et une pluralité de rainures d'orientation radiale 433 et coupant les rainures circonférentielles. Les rainures radiales 433 prennent naissance à l'extrémité ou au voisinage de l'extrémité du retournement de l'armature de carcasse ; elles ont pour fonction d'assurer un meilleur drainage de l'air occlus vers les rainures circonférentielles. Ces rainures 433 pourraient bien sûr ne pas être radiales mais faire un angle différent de 90 degrés pour croiser les rainures circonférentielles. Ces rainures radiales 433 peuvent s'étendre entre le retournement de l'armature de carcasse et le profilé de bourrelet sur une distance appropriée pour améliorer le drainage de l'air occlus vers les rainures circonférentielles 431.

Dans une autre variante non représentée, l'armature de carcasse est pourvue sur une de ses faces, et plus particulièrement celle en contact avec le profilé de bourrelet, avec une pluralité de fils textiles non revêtu de caoutchouc, chaque fil textile n'ajoutant pas de rigidité à la rigidité de l'armature de carcasse mais servant, grâce à sa structure propre, de drain pour guider et drainer l'air vers les rainures prévues sur une partie du profilé de bourrelet, cette partie n'étant pas en contact avec l'armature de carcasse et son retournement.

Dans toutes les variantes présentées, les cavités servant de réservoir pour le drainage et le piégeage de l'air occlus se présentent sous la forme de rainures continues. On pourrait bien entendu adopter toute autre sorte de cavités et notamment des rainures discontinues, lesquelles formeraient sur le pneu moulé et vulcanisé des imbrications localisées d'un profilé dans un autre profilé.

L'invention n'est pas limitée aux exemples décrits et représentés et diverses modifications peuvent y être apportées sans sortir de son cadre. Notamment cette invention s'applique à la fabrication de pneus dont l'armature de carcasse est renforcée par des renforts textiles ayant une perméabilité à l'air faible ou nulle.

## Revendications

1. Procédé de fabrication d'un pneu (1) comprenant une région de sommet (100), des flancs (200) dans le prolongement de part et d'autre de la région de sommet, chaque flanc se terminant par un bourrelet (2) destiné à coopérer avec une jante de montage du pneu, chaque bourrelet comprenant une armature de renforcement circonférentiel de bourrelet (21), ce pneu comprenant en outre une armature de carcasse (10) s'étendant entre les bourrelets en passant dans les flancs, cette armature de carcasse étant ancrée dans chaque bourrelet (2) en s'enroulant autour de chaque armature de renforcement circonférentiel de bourrelet (21) pour former un retournement (11), cette armature de carcasse comprenant au moins une nappe de caoutchouc renforcée par une pluralité de câbles métalliques ayant une perméabilité à l'air faible ou nulle, chaque bourrelet (2) comprenant une pluralité de profilés à base de caoutchouc, l'un au moins de ces profilés étant dit profilé de bourrelet (40) assurant, radialement à l'extérieur de l'armature de renforcement circonférentiel de bourrelet (21), le remplissage et la liaison mécanique entre l'armature de carcasse (10) et son retournement (11), ce profilé de bourrelet (40) comprenant une première surface axialement vers l'intérieur (42) en contact avec l'armature de carcasse et une deuxième surface axialement vers l'extérieur (43), ces deux surfaces se rejoignant en une ligne formant un apex (41) des points dudit bourrage radialement les plus à l'extérieur, ces points de l'apex étant situés à une distance D40 du point de l'armature de renforcement circonférentiel de bourrelet radialement le plus à l'intérieur (210), le retournement (11) de l'armature de carcasse étant en contact avec la deuxième face (43) du profilé de bourrelet (40) jusqu'à une distance D11 mesurée comme la distance au point de l'armature de renforcement circonférentiel de bourrelet radialement le plus à l'intérieur (210), la distance D11 étant inférieure à la distance D40, chaque bourrelet comprenant en outre au moins **un autre profilé, dit profilé de remplissage (50),** qui est, radialement à l'extérieur des points radialement les plus à l'extérieur du retournement (11) de l'armature de carcasse, au moins en partie en contact avec une partie de la deuxième surface (43) du profilé de bourrelet (40) pour former une région de contact entre lesdits deux profilés, ce procédé de fabrication d'un tel pneu étant **caractérisé en ce que** :
● on forme, dans une région située radialement au delà du retournement (11) de l'armature de carcasse, une pluralité de rainures (432), de dimensions appropriées et ne débouchant pas sur l'apex du profilé de bourrelet, **sur l'une au moins des surfaces des profilés destiné à être en contact dans la région de contact,** afin de permettre le drainage et la répartition de l'air occlus dans le bourrelet jusqu'au moulage et à la vulcanisation du pneu,
● la distance moyenne entre les rainures (432) étant au moins égale à 4 mm, et
● la première surface (42) du profilé de bourrelet étant totalement dépourvue de toute rainure.

2. Procédé de fabrication d'un pneu selon la revendication 1 **caractérisé en ce que** la distance moyenne entre les rainures (432) est au moins égale à 10 mm.

3. Procédé de fabrication d'un pneu selon l'une des revendications 1 à 2 **caractérisé en ce qu'**une partie (431) de la deuxième surface (43) axialement vers l'extérieur du profilé de bourrelet est pourvue d'une pluralité de rainures (432) orientées essentiellement circonférentiellement.

4. Procédé de fabrication d'un pneu selon l'une des revendications 1 à 3 **caractérisé en ce qu'**outre une pluralité de rainures d'orientation circonférentielle (432), il est formé une autre pluralité de rainures (433) croisant la pluralité de rainures circonférentielles (432).

5. Procédé de fabrication d'un pneu selon l'une des revendications 1 à 4 **caractérisé en ce qu'**au moins une partie de la surface du profilé de remplissage (50) en contact avec le retournement (11) de carcasse et le profilé de bourrelet (40) est pourvue avec une pluralité de rainures (432), la largeur de ces rainures étant au moins égale à 0,5 mm et au plus égale à 2 mm, la profondeur étant au moins égale à 0,5 mm et au plus égale à 2 mm.

6. Pneu (1) pour véhicule poids lourd obtenu par un procédé de fabrication selon l'une des revendications précédentes **caractérisé en ce que** l'interface de contact entre le profilé de bourrelet et le profilé de remplissage comprend une pluralité d'imbrications d'un de ces deux profilés dans l'autre profilé, ces imbrications ayant, vu en coupe, une forme et une orientation correspondant sensiblement aux rainures formées initialement sur l'un des profilés, la distance entre ces imbrications étant au moins égale à 4 mm.

7. Pneu pour véhicule poids lourd selon la revendication 7 **caractérisé en ce que** chaque câble de l'armature de carcasse est formé d'une pluralité de fils métalliques, ces fils étant assemblés ensemble et au moins les fils à l'intérieur de l'assemblage sont enrobés d'une composition de caoutchouc.

## Claims

1. Method of manufacturing a tyre (1) comprising a crown region (100), sidewalls (200) in the continuation on each side of the crown region, each sidewall ending in a bead (2) intended to collaborate with a rim for the mounting of the tyre, each bead comprising a circumferential bead reinforcement (21), this tyre further comprising a carcass reinforcement (10) extending between the beads, passing through the sidewalls, this carcass reinforcement being anchored in each bead (2) by being wrapped around each circumferential bead reinforcement (21) to form a turned-back portion (11), this carcass reinforcement comprising at least one rubber ply which is reinforced with a plurality of metal cords of low or zero air permeability, each bead (2) comprising a plurality of rubber-based strips, at least one of these strips, known as the bead rubber strip (40), radially on the outside of the circumferential bead reinforcement (21) performing a function of filling and mechanical connection between the carcass reinforcement (10) and its turned-back portion (11), this bead rubber strip (40) comprising a first surface axially towards the inside (42) in contact with the carcass reinforcement and a second surface axially towards the outside (43), these two surfaces meeting in a line forming an apex (41) of the points of the said filler which are the radially outermost, these points of the apex being situated a distance D40 from the radially innermost point (210) of the circumferential bead reinforcement, the turned-back portion (11) of the carcass reinforcement being in contact with the second face (43) of the bead rubber profiled element (40) up to a distance D11 measured as being the distance to the radially innermost point (210) of the circumferential bead reinforcement, the distance D11 being shorter than the distance D40, each bead further comprising at least one other strip, known as the filler strip (50) which, radially on the outside of the radially outermost points of the turned-back portion (11) of the carcass reinforcement is at least partly in contact with part of the second surface (43) of the bead rubber strip (40) to form a region of contact between the said two profiled elements this method of manufacturing such a tyre being **characterized in that**:
● a plurality of grooves (432) of appropriate dimensions and which do not open onto the apex of the bead rubber strip is formed, in a region situated radially beyond the turned-back portion (11) of the carcass reinforcement, on at least one of the surfaces of the strips that is intended to be in contact in the contact region so as to allow air occluded in bead to drain away and spread until such time as the tyre is moulded and vulcanized,
● the mean distance between the grooves (432) being at least equal to 4 mm, and
● the first surface (42) of the bead rubber strip being completely devoid of any groove.

2. Method of manufacturing a tyre according to Claim 1, **characterized in that** the mean distance between the grooves (432) is at least equal to 10 mm.

3. Method of manufacturing a tyre according to one of Claims 1 to 2, **characterized in that** part (431) of the second surface (43) axially towards the outside of the bead rubber strip is provided with a plurality of grooves (432) oriented essentially circumferentially.

4. Method of manufacturing a tyre according to one of Claims 1 to 3, **characterized in that** formed in addition to a plurality of circumferentially oriented grooves (432), is another plurality of grooves (433) that cross the plurality of circumferential grooves (432).

5. Method of manufacturing a tyre according to one of Claims 1 to 4, **characterized in that** at least part of the surface of the filler strip (50) in contact with the turned-back portion (11) of the carcass and the bead rubber strip (40) is provided with a plurality of grooves (432), the width of these grooves being at least equal to 0.5 mm and at most equal to 2 mm, the depth being at least equal to 0.5 mm and at most equal to 2 mm.

6. Tyre (1) for a heavy goods vehicle obtained by a method of manufacture according to one of the preceding claims, **characterized in that** the interface for contact between the bead rubber strip and the filler strip comprises a plurality of imbrications of one of these two strips in the other strip, these imbrications having, when viewed in section, a shape and orientation that corresponds substantially to the grooves initially formed on one of the strips, the distance between these imbrications being at least equal to 4 mm.

7. Tyre for a heavy goods vehicle according to Claim 6, **characterized in that** each cord of the carcass reinforcement is formed of a plurality of metal threads, these threads being assembled with one another and at least the threads on the inside of the assembly are coated with a rubber compound.

## Patentansprüche

1. Verfahren zur Herstellung eines Reifens (1), der einen Scheitelbereich (100), Flanken (200) in der Verlängerung zu beiden Seiten des Scheitelbereichs enthält, wobei jede Flanke in einem Wulst (2) endet, der dazu bestimmt ist, mit einer Montagefelge des Reifens zusammenzuwirken, wobei jeder Wulst eine Wulstumfangsverstärkungsbewehrung (21) enthält, wobei dieser Reifen außerdem eine Karkassenbewehrung (10) enthält, die sich zwischen den Wülsten erstreckt, indem sie durch die Flanken geht, wobei diese Karkassenbewehrung in jedem Wulst (2) verankert ist, indem sie sich um jede Wulstumfangsverstärkungsbewehrung (21) wickelt, um einen Umschlag (11) zu formen, wobei diese Karkassenbewehrung mindestens eine Kautschuklage enthält, die durch eine Vielzahl von Stahlseilen verstärkt ist, die eine Luftdurchlässigkeit haben, die schwach oder null ist, wobei jeder Wulst (2) mehrere Profilteile auf Kautschukbasis enthält, wobei mindestens eines dieser Profilteile, Wulstprofilteil (40) genannt, radial außerhalb der Wulstumfangsverstärkungsbewehrung (21) das Füllen und die mechanische Verbindung zwischen der Karkassenbewehrung (10) und ihrem Umschlag (11) gewährleistet, wobei dieses Wulstprofilteil (40) eine erste Fläche axial nach innen (42) in Kontakt mit der Karkassenbewehrung und eine zweite Fläche axial nach außen (43) enthält, wobei diese zwei Flächen sich in einer Linie verbinden, die einen Apex (41) der Punkte der Füllung formen, die radial am weitesten außen liegen, wobei diese Punkte des Apex sich in einem Abstand D40 von dem Punkt der Wulstumfangsverstärkungsbewehrung befinden, der radial am weitesten innen liegt (210), wobei der Umschlag (11) der Karkassenbewehrung mit der zweiten Seite (43) des Wulstprofilteils (40) bis zu einem Abstand D11 in Kontakt ist, der als der Abstand zum Punkt der Wuulstumfangsverstärkungsbewehrung gemessen wird, der radial am weitesten innen liegt (210), wobei der Abstand D11 geringer als der Abstand D40 ist, wobei jeder Wulst außerdem mindestens ein weiteres Profilteil enthält, Füllprofilteil (50) genannt, das radial außerhalb der Punkte, die radial am weitesten außerhalb des Umschlags (11) der Karkassenbewehrung liegen, zumindest zum Teil mit einem Teil der zweiten Fläche (43) des Wulstprofilteils (40) in Kontakt ist, um einen Kontaktbereich zwischen den zwei Profilteilen zu formen, wobei dieses Herstellungsverfahren eines solchen Reifens **dadurch gekennzeichnet ist, dass**:
● in einem Bereich, der sich radial jenseits des Umschlags (11) der Karkassenbewehrung befindet, eine Vielzahl von Rillen (432) geformt wird, die geeignete Abmessungen haben und nicht am Apex des Wulstprofilteils münden, auf mindestens einer der Flächen der Profilteile, die dazu bestimmt sind, in dem Kontaktbereich in Kontakt zu sein, um den Abzug und die Verteilung der im Wulst bis zum Formen und Vulkanisieren des Reifens eingeschlossenen Luft zu erlauben,
● der mittlere Abstand zwischen den Rillen (432) mindestens gleich 4 mm ist, und
● die erste Fläche (42) des Wulstprofilteils keinerlei Rille aufweist.

2. Verfahren zur Herstellung eines Reifens nach Anspruch 1, **dadurch gekennzeichnet, dass** der mittlere Abstand zwischen den Rillen (432) mindestens gleich 10 mm ist.

3. Verfahren zur Herstellung eines Reifens nach einem der Ansprüche 1 bis 2, **dadurch gekennzeichnet, dass** ein Teil (431) der zweiten Fläche (43) axial nach außerhalb des Wulstprofilteils mit einer Vielzahl von Rillen (432) versehen ist, die im Wesentlichen in Umfangsrichtung ausgerichtet sind.

4. Verfahren zur Herstellung eines Reifens nach einem der Ansprüche 1 bis 3, **dadurch gekennzeichnet, dass** außer der Vielzahl von Rillen mit Umfangsausrichtung (432) eine andere Vielzahl von Rillen (433) geformt wird, die die Vielzahl von Umfangsrillen (432) kreuzen.

5. Verfahren zur Herstellung eines Reifens nach einem der Ansprüche 1 bis 4, **dadurch gekennzeichnet, dass** mindestens ein Teil der Fläche des Füllprofilteils (50) in Kontakt mit dem Karkassenumschlag (11) und dem Wulstprofilteil (40) mit einer Vielzahl von Rillen (432) versehen ist, wobei die Breite dieser Rillen mindestens gleich 0,5 mm und höchstens gleich 2 mm ist, wobei die Tiefe mindestens gleich 0,5 mm und höchstens gleich 2 mm ist.

6. Reifen (1) für ein Schwerlastfahrzeug, der durch ein Verfahren zur Herstellung eines Reifens nach einem der vorhergehenden Ansprüche erhalten wird, **dadurch gekennzeichnet, dass** die Kontaktschnittstelle zwischen dem Wulstprofilteil und dem Füllprofilteil eine Vielzahl von Verschachtelungen eines dieser zwei Profilteile in das andere Profilteil enthält, wobei diese Verschachtelungen im Schnitt eine Form und eine Ausrichtung haben, die im Wesentlichen den Rillen entsprechen, die ursprünglich auf einem der Profilteile geformt sind, wobei der Abstand zwischen diesen Verschachtelung mindestens gleich 4 mm ist.

7. Reifen für eine Schwerlastwagen nach Anspruch 6, **dadurch gekennzeichnet, dass** jedes Seil der Karkassenbewehrung aus einer Vielzahl von Metalldrähten geformt ist, wobei diese Drähte zusammengebaut sind, und mindestens die Drähte im Inneren des Zusammenbaus mit einer Kautschukzusammensetzung umhüllt sind.
